# EUROPEAN PATENT SPECIFICATION

(11) **EP 0 787 374 B1**
(45) Date of publication and mention of the grant of the patent: **14.10.1998**
(21) Application number: 94910812.0
(22) Date of filing: 02.03.1994
(51) Int. Cl.: H01S 3/06, H01S 3/08

(54) **Laser**
LASER
Laser

(43) Date of publication of application: 06.08.1997
(73) Proprietor: CELL ROBOTICS, INC., Albuquerque, NM 87107 (US)
(72) Inventor: POLUSHKIN, Valeri, G. Apartment 41, Troitsk Moscow Region 142032 (RU); KOKHANOVSKY, Sergey, A. Apartment 48, Troitsk Moscow Region 142032 (RU); FEDEROV, Evgeny A., deceased (RU)
(74) Representative: Lucas, Brian Ronald
(86) International application number: PCT/US94/02270
(87) International publication number: WO 94/21011

(56) References cited:
- DE-A- 1 928 665
- DE-A- 2 011 322
- GB-A- 1 026 596
- US-A- 3 500 240

## Description

This invention relates to an active medium for a laser and to a laser including such an active medium.

In solid state lasers an active medium, for example a crystal of ruby or doped yttrium-aluminium-garnet (YAG) is exposed to a pump, for example a xenon arc lamp. The pump induces the crystal to emit light of a particular frequency which, by various devices can be concentrated into a coherent laser beam.

In Fig. 2 of GB-A-1 026 596 the active medium is a crystal in the form of a rod with outwardly projecting ends which form dihedral reflectors. In particular, one end of the rod is provided with two facets which are inclined at 45° with respect to the longitudinal axis of the rod and which converge to a ridge. The other end of the rod is provided with two facets which are also inclined at 45° with respect to the longitudinal axis of the rod. However, instead of converging to a ridge the facets terminate at an end facet which extends perpendicular to the longitudinal axis of the rod and forms a window.

In use, the light generated in the active medium harmonically oscillates back and forth in the crystal until it leaves via the window.

The present invention provides an active medium for a laser, which active medium comprises a rod having polyhedral ends which are disposed and configured so that stimulated radiation is internally reflected from end to end in the rod, one of which ends is provided with a truncated portion forming a window to allow the exit of a laser beam, characterised in that said polyhedral ends each have at least three facets.

Other features of the present invention are set out in Claims 2 et seq.

Lasant rods according to this invention comprise a laser cavity bounded by the rod ends and side(s).

A laser in accordance with claim 8 of the present invention may have a light pumping apparatus (e.g. but not limited to a flash lamp or xenon arc lamp) mounted in a housing (e.g. but not limited to a cylindrical tube with a reflective-material coated, e.g. silvered, interior surface) with the housing side-by-side with or adjacent to the laser element. A conventional power source may provide power to the light pumping apparatus and conventional cooling apparatus may be used to provide any needed cooling of the assembly. In certain embodiments cooling is unnecessary. Light from the light pumping apparatus may be directed to and into the rod.

For a better understanding of the present invention reference will now be made, by way of example, to the accompanying drawings, in which:-
Fig. 1 is a schematic side view of a conventional laser;
Fig. 2A is a side view of the active medium used in the laser of Fig. 1;
Fig. 2B is an end view of one end of the active medium of Fig. 2A;
Fig. 2C is an end view of the other end of the active medium of Fig. 2A;
Fig. 3A is a side view of a first embodiment of an active medium according to the present invention;
Fig. 3B is an end view of one end of the active medium of Fig. 3A;
Fig. 3C is an end view of the other end of the active medium of Fig. 3A;
Fig. 4A is a side view of a second embodiment of an active medium according to the present invention;
Fig. 4B is an end view of one end of the active medium of Fig. 4A; and
Fig. 4C is an end view of the other end of the active medium of Fig. 4A.

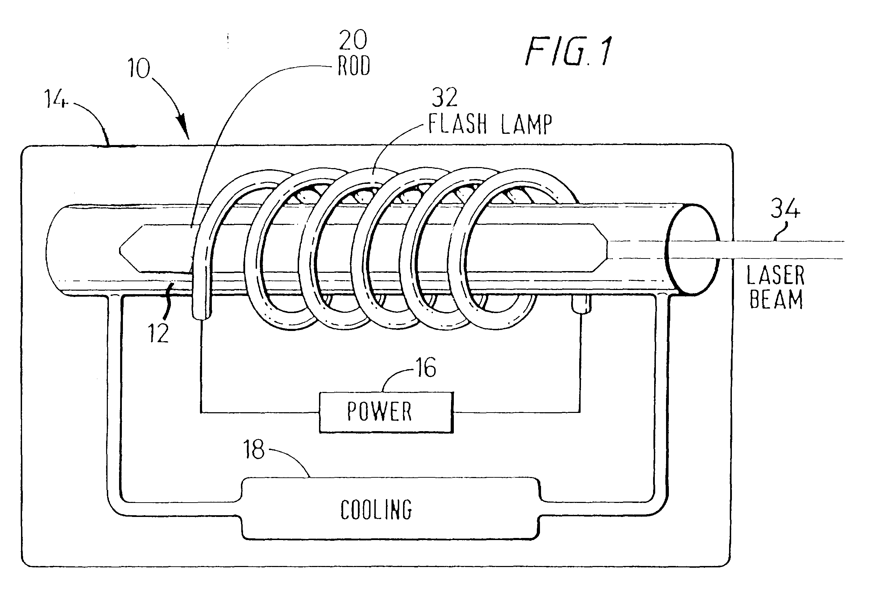

Referring now to Fig. 1, a laser 10 comprises an active medium in the form of a rod 20 mounted in a housing 14. The rod 20 is surrounded by a pumping device in the form of a flash lamp 32 which is powered by a power source 16. The flash lamp 32 stimulates the emission of radiation (e.g. light) in the rod 20 which leaves the rod 20 in the form of a laser beam 34. The laser 10 also includes a cooling apparatus 18.

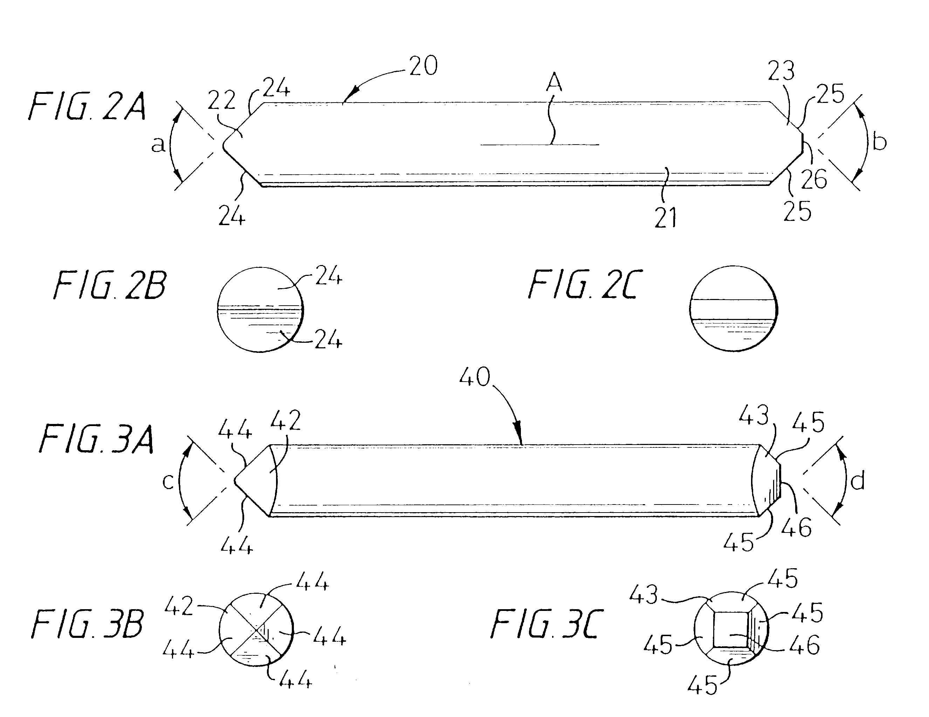

Figs. 2A, B and C show the rod 20 which is similar to that disclosed in GB-A-1 026 596. The rod 20 has a body 21 with a first end 22 and a second end 23. Each end 22, 23 is dihedral. In particular, the first end 22 has two facets 24 which are at an angle a of 90° with respect to each other and each at an angle of 45° to the longitudinal axis A of the rod 20 and which converge to a ridge as shown in Fig. 2B. The second end 23 of the rod 20 has two facets 25 which are also inclined at 45° with respect to the longitudinal axis of the rod. However, instead of converging to a ridge the facets 25 terminate at an end facet which extends perpendicular to the longitudinal axis of the rod and forms a window 26. The facets 25 are at an angle b of 90° to each other. The ends 22 and 23 are disposed and configured so that light (or other stimulated radiation) is internally reflected from end to end in the rod 20 and then exits the rod 20 as the output laser beam 34 through the window 26.

The active medium may be made of, for example, YAG doped with erbium in the shape of a cylindrical bar 120 millimeters long and 8 millimeters in diameter. In another embodiment the rod is 105 millimeters long with a 6 millimeter diameter. In other embodiments the rod is made from corundum doped with titanium or YAG doped with neodymium.

Figs. 3A, B and C illustrate an active medium in accordance with the present invention. The active medium is in the form of a rod 40 which has a body 41 with a first end 42 and a second end 43. Both ends 42 and 43 are polyhedral. In particular, the first end 42 has four facets 44 which are at an angle c of 90° with respect to each other and each at an angle of 45° to a central longitudinal axis of the rod 40. The second end 43 of the rod 40 has four facets 45 which converge towards an end facet which is square and which forms a window 46 for the laser beam 34 to exit the rod 40. The facets 45 are at an angle d of 90° to each other and at an angle of 45° to the central longitudinal axis of the rod 40. The ends 42 and 43 are disposed and configured so that light (or other stimulated radiation) is internally reflected from end to end in the rod 40 and then exits the rod 40 through the window 46 as an output laser beam.

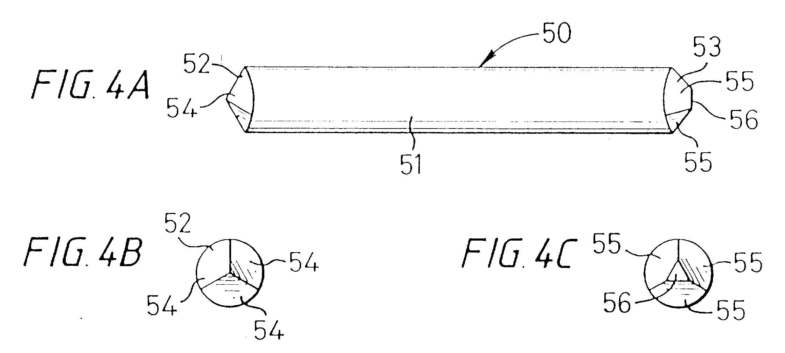

Referring now to Figs. 4A, B and C a second embodiment of an active medium according to the present invention comprises a rod 50 with a body 51. The body 51 has a first end 52 and a second end 53, both of which are polyhedral. In particular, the first end 52 has three facets 54. The second end 53 of the rod 50 has three facets 55 which converge towards an end facet which is triangular and forms a window 56 for an output laser beam to exit the rod 50. The ends 52 and 53 are disposed and configured so that light (or other stimulated radiation) is internally reflected from end to end in the rod 50 and then exits the rod 50 through the window 56 as a laser beam.

Active medium according to the present invention have ends which are in the shape of polyhedrons having three or more sides; e.g. a trihedral pyramid, a tetrahedral pyramid or a quintahedral pyramid. Preferably the polyhedrons are shaped to effect total or nearly total internal reflection (preferably 90% or more, and most preferably 100% total internal reflection) within the rod.

The rod may have any desired cross-section, e.g. but not limited to circular (cylindrical), rectangular, square, triangular, oval (elliptical).

The distance from the center of a window to one corner point thereof is preferably in the range of from 5% to 75% of the radius of the rod on which the window is located and in certain most preferred embodiments from 10% to 25%. However, in the embodiment of Fig. 3C the distance from the center of the square to a corner thereof is preferably about 50% of the radius of the rod.

Active medium according to the invention select for higher order light modes (sets of travelling light beams), modes which are at a greater angle to a rod's central optical axis than are lower order modes. Higher order mode laser beams are preferred in certain embodiments since they produce relatively wider and/or relatively shallower holes, e.g. when used to make a hole in the flesh of a living being to take a blood sample.

## Claims

1. An active medium for a laser, which active medium comprises a rod (40 ; 50) having polyhedral ends (42, 43; 52, 53) which are disposed and configured so that stimulated radiation is internally reflected from end to end in the rod, one of which ends is provided with a truncated portion forming a window (46; 56) to allow the exit of a laser beam, characterised in that said polyhedral ends (42, 43; 52, 53) each have at least three facets (44, 45; 54, 55).

2. An active medium as claimed in Claim 1, wherein said rod (40; 50) is of circular cross-section and the distance from the centre of said window (46; 56) to a corner thereof is from 5% to 75% of the radius of said rod.

3. An active medium as claimed in Claim 1 or 2, wherein at least 90% internal reflection is achieved in said rod (40; 50).

4. An active medium as claimed in Claim 1, 2 or 3, wherein one polyhedral end (52) has three facets (54) and the other polyhedral end has three facets (55) which converge to a triangular window (56).

5. An active medium as claimed in Claim 1, 2 or 3, wherein one polyhedral end (42) has four facets (44) and the other polyhedral end (43) has four facets (45) which converge to a square window (46).

6. An active medium as claimed in Claims 2 and 5, wherein the distance from the centre of said square window (46) to a corner thereof is approximately 50% of the radius of the rod (40).

7. An active medium as claimed in Claim 5 or 6, wherein said facets (44,45) are inclined to one another at an angle (c, d) of 90°.

8. A laser including an active medium as claimed in any preceding claim.

## Patentansprüche

1. Aktives Medium für einen Laser, welches einen Stab (40; 50) mit vielflächigen Enden (42, 43; 52, 53) aufweist, die derart angeordnet und gestaltet sind, daß stimulierte Strahlung intern von Ende zu Ende in dem Stab reflektiert wird, und von denen ein Ende mit einem ein Fenster (46; 56) bildenden abgestumpften Abschnitt ausgebildet ist, um einen Laserstrahl austreten zu lassen, **dadurch gekennzeichnet**, daß die vielflächigen Enden (42, 43; 52, 53) jeweils mindestens drei Facetten (44, 45; 54, 55) aufweisen.

2. Aktives Medium nach Anspruch 1, bei dem der Stab (40; 50) kreisförmigen Querschnitt aufweist und die Entfernung von der Mitte des Fensters (46; 56) zu einer Ecke des Pensters 5% bis 75% des Stabradius' ausmacht.

3. Aktives Medium nach Anspruch 1 oder 2, bei dem mindestens 90% interne Reflexion in dem Stab (40; 50) erreicht wird.

4. Aktives Mcdium nach Anspruch 1, 2 oder 3, bei dem ein vielflächiges Ende (52) drei Facetten (54) und das andere vielflächige Ende drei Facetten (55), die zu einem dreieckigen Fenster (56) konvergieren, aufweist.

5. Aktives Medium nach Anspruch 1, 2 oder 3, bei dem ein vielflächiges Ende (42) vier Facetten (44) aufweist und das andere vielflächige Ende (43) vier Facetten (45), die zu einem quadratischen Fenster (46) konvergieren, aufweist.

6. Aktives Medium nach Anspruch 2 und 5, bei dem der Abstand von der Mitte des quadratischen Fensters (46) zu einer Ecke von diesem etwa 50% des Radius des Stabs (40) entspricht.

7. Aktives Medium nach Anspruch 5 oder 6, bei dem die Facetten (44, 45) zueinander unter einem Winkel (c, d) von 90% geneigt sind.

8. Laser mit einem aktiven Medium nach einem vorhergehenden Anspruch.

## Revendications

1. Milieu actif pour laser, lequel comprend une barre (40 ; 50) présentant des extrémités polyédriques (42, 43 ; 52, 53) qui sont disposées et configurées de façon qu'un rayonnement stimulé soit réfléchi intérieurement d'une extrémité à l'autre de la barre, l'une des extrémités étant prévue avec une partie tronquée formant une fenêtre (46 ; 56) pour permettre la sortie d'un faisceau laser, caractérisé en ce que lesdites extrémités polyédriques (42, 43 ; 52, 53) présentent, chacune, au moins trois facettes (44, 45 ; 54, 55).

2. Milieu actif selon la revendication 1, dans lequel ladite barre (40 ; 50) est de section transversale circulaire et la distance allant du centre de ladite fenêtre (46 ; 56) à un coin de celle-ci représente de 5% à 75% du rayon de ladite barre.

3. Milieu actif selon la revendication 1 ou 2, dans lequel 90%, au moins, de la réflexion interne sont obtenus dans ladite barre (40 ; 50).

4. Milieu actif selon la revendication 1, 2 ou 3, dans lequel une extrémité polyédrique (52) comporte trois facettes (54) et l'autre extrémité polyédrique comporte trois facettes (55) qui convergent vers une fenêtre triangulaire (56).

5. Milieu actif selon la revendication 1, 2 ou 3, dans lequel une extrémité polyédrique (42) présente quatre facettes (44) et l'autre extrémité polyédrique (43) présente quatre facettes (45) qui convergent vers une fenêtre carrée (46).

6. Milieu actif selon les revendications 2 et 5, dans lequel la distance du centre de ladite fenêtre carrée (46) à un coin de celle-ci représente environ 50% du rayon de la barre (40).

7. Milieu actif selon la revendication 5 ou 6, dans lequel lesdites facettes (44, 45) sont inclinées l'une par rapport à l'autre suivant un angle (c, d) de 90°.

8. Laser comprenant un milieu actif selon l'une quelconque des revendications précédentes.
